Europäisches Patentamt

European Patent Office

Office européen des brevets

(19)

(11) EP 1 701 049 A1

(12) EUROPEAN PATENT APPLICATION

(43) Date of publication:
13.09.2006 Bulletin 2006/37

(51) Int Cl.:
F16C 19/52 (2006.01)   F16C 33/66 (2006.01)
F16N 29/00 (2006.01)   G01M 13/04 (2006.01)

(21) Application number: 05101734.1

(22) Date of filing: 07.03.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(71) Applicant: AB SKF
41550 Göteborg (SE)

(72) Inventors:
• Morales Espejel, Guillermo Enrique
  1273 JP Huizen (NL)

• Gabelli, Antonio
  3402 GP Ijsselstein (NL)
• Meeuwenoord, Ralph Cornelis Petrus
  3435 BC Nieuwegein (NL)

(74) Representative: van Westenbrugge, Andries
Nederlandsch Octrooibureau
Postbus 29720
2502 LS Den Haag (NL)

(54) **Method and system for detecting contacts in a hybrid bearing**

(57)   A method for detecting solid-to-solid contact in a hybrid rolling element bearing, said bearing comprising rings of a conductive material, such as steel, and at least one rolling element having a non-conductive material body, such as a ceramic body, comprising the steps of:

-   providing the at least one rolling element body with a metal-mixed diamond-like carbon coating,
-   measuring the electrical capacitance or the electrical conductivity between said rolling element and at least one of the rings,
-   establishing the intensity of the contact, such as full contact or absence of contact, between said rolling element and said ring on the basis of said measurement.

Fig 1

**Description**

The invention is related to the detection of the state of lubrication of a rolling element bearing which comprises steel rings and rolling elements of a non-metal material such as ceramics. Such bearings, which due to the different materials therein are usually indicated as hybrid bearings, are applied in high duty environments and have to satisfy strict reliability and safety requirements. An example of the field of application of this type of bearings is given by the support bearings by means of which a helicopter rotor is connected to the helicopter fuselage.

The bearings in question are thus fit for high duty applications which of course entails the necessity to maintain a proper lubrication thereof. As it is not possible to assure full lubrication conditions at any time, contingencies must be provided so as to limit the risks. However, precisely in this connection the bearings in question pose a risk. For instance, having regard to the fact that the non-metal materials usually do not conduct electricity, it is not readily feasible to apply monitoring systems which rely on this property. In full metal bearings, by means of capacitance methods or conductivity methods, it can be checked whether metal-to metal contact occurs in the bearing. The detection of such contact makes clear that the lubrication conditions of the bearing have fallen below an acceptable level.

The object of the invention is to provide a solution to this problem of monitoring the lubrication conditions in a hybrid rolling element bearing. This is achieved by a method for detecting solid-to-solid contact in a hybrid rolling element bearing, said bearing comprising rings of a conductive material, such as steel, and at least one rolling element having a non-conductive material body, such as a ceramic body, comprising the steps of:

- providing the at least one rolling element with a metal-mixed diamond-like carbon coating,
- measuring the electrical capacitance or the electrical conductivity between said rolling element and at least one of the rings,
- establishing the intensity of the contact, such as full contact or absence of contact, between said rolling element and said ring on the basis of said measurement.

The coating can be provided on a rolling element having a non-conductive material body. Alternatively or additionally, the coating can be provided on a rolling element having a steel body. The electrically conductive coating of the ceramic rolling elements offers the possibility to apply monitoring techniques which rely on the same principles as in the standard full metal bearings.

Furthermore, the coating in question should be able to sustain the heavy loads and thin lubrication conditions to which hybrid bearings are usually subjected, as for instance in helicopter rotor blade bearings. To that end, the steps are taken of applying a metallic intermediate layer onto the body of the rolling element member, and thereafter applying the metal-mixed diamond-like carbon layer on the metallic intermediate layer. A coating of this type has been disclosed in WO-A-9914512. As is also disclosed in said publication, a transition zone may be provided between the metal-mixed diamond-like carbon layer and the metallic intermediate layer. In this connection, a gradual reduction of a metallic carbide forming element content towards the surface of the metal-mixed diamond-like carbon layer may be applied. W, Mo, and/or Ti may be used as metallic carbide forming element. The graphite content may gradually increase towards the surface of the metal-mixed diamond-like carbon coating.

The coating may be structured in different ways. According to a first possibility, the metal-mixed diamond-like carbon coating contains alternating layers of predominantly diamond-like carbon and layers of predominantly metal carbide. In particular, the metal-mixed diamond-like carbon coating may have alternating layers of predominantly diamond-like carbon, containing a relatively small amount of metal carbide, and layers of predominantly metal carbide comprising a relatively small amount of diamond-like carbon.

According to a second possibility, the metal-mixed diamond-like carbon coating contains clusters of metal carbide interspersed throughout a matrix of diamond-like carbon. Preferably, the maximum size of the clusters is 100 nm.

The invention is also related to a system for determining solid-to-solid contact in a bearing, comprising a hybrid rolling element bearing having rings of a conductive material, such as steel, and at least one composite rolling element having a non-conductive material body, such as a ceramic body, and a coating of metal-mixed diamond-like carbon coating on the body of at least one of the elements, as well as a measuring device comprising a first measuring point on a ring and a second measuring point on the at least one coated rolling element. Said coated rolling element may have a steel or a ceramic body.

Alternatively, the system for determining solid-to-solid contact in a bearing, may comprise a hybrid rolling element bearing having rings of a conductive material, such as steel, and at least one composite rolling elements having a non-conductive material body, such as a ceramic body, and a coating of metal-mixed diamond-like carbon coating on said body, as well as a measuring device comprising a first measuring point on a first rolling element and a second measuring point on the second rolling element. One or both of the first and second coated rolling elements may comprise a steel or a ceramic body.

The invention will be explained further with reference to the examples shown in the figures.

Figures 1 and 2 show an embodiment of the system according to the invention.
Figure 3 shows a first embodiment of a rolling element applied in said system.
Figure 4 shows a second embodiment of a rolling element.

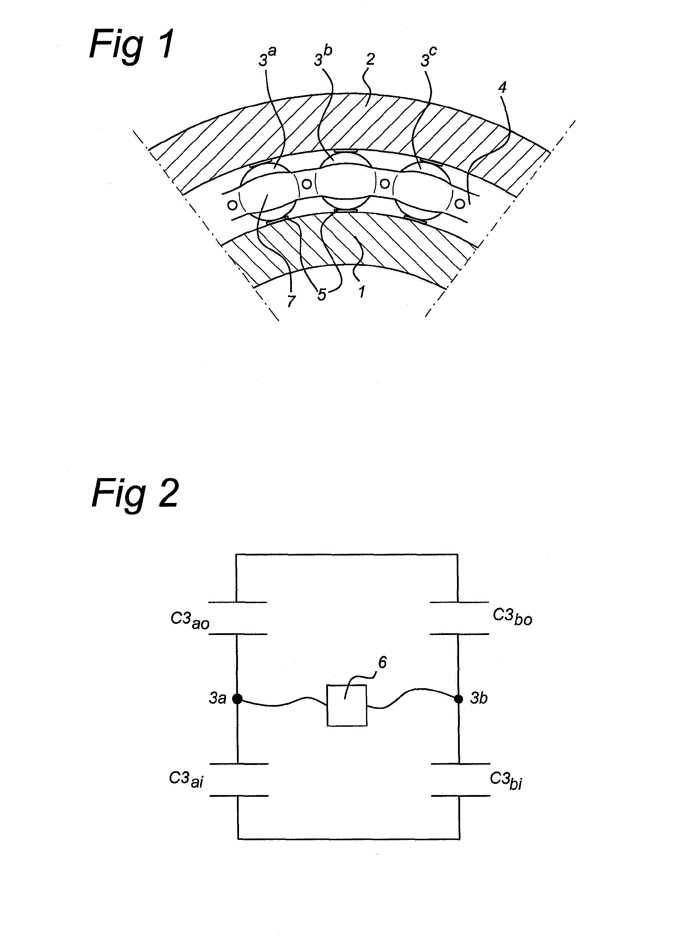

The rolling element bearing as shown in figure 1 comprises an inner ring 1, an outer ring 2 and a series of rolling elements 3 which are separated from each other by means of a cage 4. With the aim of ensuring a proper function of the bearing, a lubricant 5, for instance oil or grease, is available in the contacts between the rings 1, 2 and the rolling elements 3. This amount of lubricant 5 in the contacts in question should be checked regularly. In case the amount of lubricant is too small, such as under starved lubrication conditions, the bearing may be damaged prematurely.

In this connection, it is of importance that the thickness of the lubricant layer influences the electric capacity of the bearing. This phenomenon can be used to check that thickness. To that end, the capacity $C_{3ab}$ is measured between the first rolling element 3a and the second rolling element 3b, as shown in figure 1. This capacity comprises the following components:

1. the capacity between the first rolling element 3a and the second rolling element 3b through the inner ring 1, and
2. the capacity between the first rolling element 3a and the second rolling element 3b via the outer ring 2.

It is assumed that the capacity between the first rolling element 3a and the outer ring is $C_{3ao}$, the capacity between the first rolling element 3a and the inner ring 1 $C_{3ai}$, the capacity between the second rolling element 3a and the outer ring 2 $C_{3b0}$ and the capacity between the second rolling element 3b and the outer ring 2 $C_{3bi}$. As a result, the capacity $C_{3ab}$ between the first rolling element 3a and the second rolling element 3b is

$$C_{3ab} = \frac{C_{3ao} * C_{3bo}}{C_{3ao} + C_{3bo}} + \frac{C_{3ai} * C_{3bi}}{C_{3ai} + C_{3bi}} .$$

Figure 2 shows the electric equivalent of the rolling element bearing of figure 1. The capacity $C_{3ab}$ is measured between the rolling elements 3a and 3b of figure 1. The capacity $C_{3ab}$ can be measured by means of a capacity measuring apparatus 6. This capacity measuring apparatus 6 can be carried out in several ways. For instance, the capacity measuring apparatus 6 can be included in one of the rolling elements 3a. The capacity measuring apparatus 6 can be connected to another rolling element 3b, by means of a sliding ring (not shown).

The capacity measuring apparatus 6 can also be connected to the environment, or to the inner ring 1 or outer ring 2. In that case, the capacity is measured by contacting the rolling elements 3a and 3b by means of sliding contacts. Furthermore, the rolling elements 3a, 3b, ........ can be provided with contact plates (not shown). In case the sliding contacts make contact with the contact plates only during a certain phase of the rotation of the rolling elements, the capacity can only be measured during such contact.

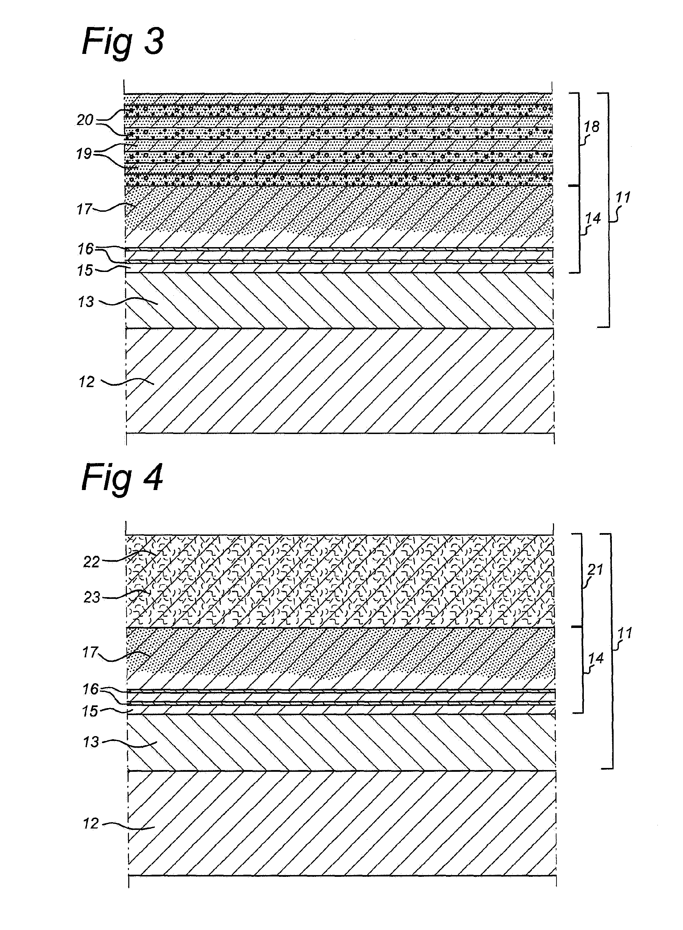

According to the invention, at least one rolling element 3a, 3b, 3c, .... may comprise a non-conductive material body, for instance a ceramic body. With the aim of providing the possibility to measure the amount of lubricant in such bearing as well, a coating 7 can be provided on such rolling element. Examples of such coated rolling elements are discussed below with reference to figures 3 and 4.

Figure 3 shows a cross-section to the outer layers of the rolling element or raceway of a ring of a rolling element bearing as applied in the system according to the invention. The full outer part has been indicated in its entirety by reference numeral 11, and has been applied to a substrate 12, e.g. ceramic.

Said full outer part 11 comprises an intermediate metallic interlayer 13, which has been applied directly onto the substrate 12, a transition zone 14 which follows the intermediate metallic interlayer 13, and a metal-mixed diamond-like carbon coating 18. The transition zone 14 comprises an area wherein a multi-layer transition is obtained, with alternating metal-carbide layers 15 and metallic layers 16. Subsequently a smooth transition area 17 is obtained, into the multi-layer structure 18. The transition area 17 provides a smooth transition from metal-carbide to a mixture of metal-carbide and diamond-like carbon. Said multi-layer structure 8 comprises alternating metal carbide layers 19 and diamond-like carbon layers 20.

Figure 4 shows a cross-section to an alternative embodiment, also of the outer layers of a rolling element as the raceway of a ring of a rolling element bearing. The full coating 21 comprises a matrix 22 of predominantly diamond-like carbon, with a dispersion of metal carbide particles 23. Such particles or clusters 23 of metal carbide may have a maximum dimension of 100 nm. The substrate 12, interlayer 13 and transition zone 14 are similar to the corresponding ones in the embodiment of figure 3.

**Claims**

1. Method for detecting solid-to-solid contact in a hybrid rolling element bearing, said bearing comprising rings (1, 2) of a conductive material, such as steel, and at least one rolling element (3a, 3b,...) having a non-conductive material body (12), such as a ceramic body, comprising the steps of:

   - providing the at least one rolling element body (12) with a metal-mixed diamond-like carbon coating (18, 21),
   - measuring the electrical capacitance or the electrical conductivity between said rolling element (3a, 3b,....) and at least one of the rings (1, 2),
   - establishing the intensity of the contact, such as full contact or absence of contact, between said rolling element (3a, 3b,...) and said ring (1, 2) on the basis of said measurement.

2. Method according to claim 1, comprising the step of providing the coating (18, 21) on a rolling element (3a, 3b,.....) having a non-conductive material body (12).

3. Method according to claim 1 or 2, comprising the step of providing the coating (18, 21) on a rolling element having a steel body.

4. Method according to any of the preceding claims, comprising the step of applying a metallic intermediate layer (13) onto the non-conductive material body (12) of the rolling element member (3a, 3b,....), and thereafter applying the metal-mixed diamond-like carbon coating (18, 21) on the metallic intermediate layer (13).

5. Method according to claim 4, comprising the step of providing a transition zone (14) between the metal-mixed diamond-like carbon coating (18, 21) and the metallic intermediate layer (13).

6. Method according to claims 4 or 5, comprising the step of providing a gradual reduction of a metallic carbide forming element (preferably W, Mo or Ti) content towards the surface of the metal-mixed diamond-like carbon coating (18, 21).

7. Method according to claim 6, comprising the step of providing W, Mo, Ti as metallic carbide forming element.

8. Method according to any of claims 4-7, comprising the step of providing a gradual increase of a graphite content towards the surface of the metal-mixed diamond-like carbon coating (18, 21).

9. Method according to any of claims 4-8, comprising the step of providing the metal-mixed diamond-like carbon coating (18) with alternating layers (20) of predominantly diamond-like carbon and layers (19) ofpredominantly metal carbide.

10. Method according to any of claims 4-9, comprising the step of providing the metal-mixed diamond-like carbon coating with alternating layers (20) of predominantly diamond-like carbon, containing a relatively small amount of metal carbide, and layers (19) of predominantly metal carbide comprising a relatively small amount of diamond-like carbon.

11. Method according to any of claims 4-8, comprising the step of providing the metal-mixed diamond-like carbon coating (21) with clusters (23) of metal carbide interspersed throughout a matrix (22) of diamond-like carbon.

12. Method according to claim 11, wherein the maximum size of the clusters (23) is 100 nm.

13. Method according to any of claims 4-12, wherein the metal-mixed diamond-like coating (18, 21) comprises Ni.

14. Method according to any of claims 4-13, wherein the thickness of the metal-mixed diamond-like carbon coating (18, 21) is 10 micrometer.

15. System for determining solid-to-solid contact in a bearing, comprising a hybrid rolling element bearing having rings (1, 2) of a conductive material, such as steel, and at least one composite rolling element (3a, 3b, ....) having a non-conductive material body (12), such as a ceramic body, and a coating of metal-mixed diamond-like carbon coating (18, 21) on the body (20) of at least one of the elements (3a, 3b,.....), as well as a measuring device (6) comprising a first measuring point on a ring (1, 2) and a second measuring point on the at least one coated rolling element (3a, 3b,...).

16. System for determining solid-to-solid contact in a bearing, comprising a hybrid rolling element bearing having rings (1, 2) of a conductive material, such as steel, and at least two composite rolling elements (3a, 3b,....) having a non-conductive material body (12), such as a ceramic body, and a coating of metal-mixed diamond-like carbon coating (18, 21) on said body (12), as well as a measuring device (6) comprising a first measuring point on a first coated rolling element (3a, 3b,...) and a second measuring point on the second coated rolling element (3a, 3b, ....).

## Fig 1

## Fig 2

## Fig 3

## Fig 4

**European Patent Office**

## EUROPEAN SEARCH REPORT

Application Number

EP 05 10 1734

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 2003/098691 A1 (MATSUYAMA NAOKI ET AL) 29 May 2003 (2003-05-29) * paragraph [0035] - paragraph [0037]; figures 1,2 * ----- | 1-14 | F16C19/52 F16C33/66 F16N29/00 G01M13/04 |
| Y | WO 99/14512 A (SKF INDUSTRIAL TRADING & DEVELOPMENT COMPANY B.V; HORTON, STUART, ALEX) 25 March 1999 (1999-03-25) * the whole document * ----- | 1-14 | |
| A | WO 87/03053 A (AB SCANIAINVENTOR) 21 May 1987 (1987-05-21) * page 1, line 1 - page 5, line 30; figures 1-5 * ----- | 1,15,16 | |
| A | DE 102 59 012 A1 (SIRONA DENTAL SYSTEMS GMBH) 8 July 2004 (2004-07-08) * paragraph [0053] - paragraph [0066]; claims 10,12,15,16; figures 1-4 * ----- | 1,3-7, 10,14 | |
| A | EP 0 288 940 A (HONEYWELL INC) 2 November 1988 (1988-11-02) * the whole document * ----- | 1 | TECHNICAL FIELDS SEARCHED (Int.Cl.7) F16C F16N G01M |

The present search report has been drawn up for all claims

| Place of search | Date of completion of the search | Examiner |
|---|---|---|
| Munich | 12 May 2005 | Fischbach, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 10 1734

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2005

| Patent document cited in search report | | Publication date | Patent family member(s) | | Publication date |
|---|---|---|---|---|---|
| US 2003098691 | A1 | 29-05-2003 | JP | 2003156038 A | 30-05-2003 |
| WO 9914512 | A | 25-03-1999 | NL | 1007046 C2 | 17-03-1999 |
| | | | CN | 1103878 C | 26-03-2003 |
| | | | DE | 69812389 D1 | 24-04-2003 |
| | | | DE | 69812389 T2 | 21-08-2003 |
| | | | EP | 1015780 A1 | 05-07-2000 |
| | | | JP | 2001516857 T | 02-10-2001 |
| | | | WO | 9914512 A1 | 25-03-1999 |
| | | | RU | 2231695 C2 | 27-06-2004 |
| | | | US | 6340245 B1 | 22-01-2002 |
| WO 8703053 | A | 21-05-1987 | SE | 447010 B | 20-10-1986 |
| | | | WO | 8703053 A1 | 21-05-1987 |
| | | | SE | 8402451 A | 08-11-1985 |
| DE 10259012 | A1 | 08-07-2004 | AU | 2003302278 A1 | 14-07-2004 |
| | | | WO | 2004056280 A1 | 08-07-2004 |
| EP 0288940 | A | 02-11-1988 | US | 5001435 A | 19-03-1991 |
| | | | CA | 1304129 C | 23-06-1992 |
| | | | DE | 3867893 D1 | 05-03-1992 |
| | | | EP | 0288940 A2 | 02-11-1988 |
| | | | JP | 63290936 A | 28-11-1988 |

For more details about this annex : see Official Journal of the European Patent Office, No. 12/82

**EP 1 701 049 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9914512 A